# EUROPEAN PATENT APPLICATION

(11) **EP 4 768 434 A1**
(43) Date of publication of application: **01.07.2026**
(21) Application number: 24862788.7
(22) Date of filing: 03.09.2024
(51) Int. Cl.: C01B 32/16, D01F 9/127, D01F 9/133

(54) **DEVICE FOR COLLECTING CARBON NANOTUBES AND DEVICE FOR PRODUCING CARBON NANOTUBES**

(30) Priority: 04.09.2023 JP 2023142925
(71) Applicant: Dowa Thermotech Co., Ltd., Chiyoda-ku Tokyo 101-0021 (JP); Meijo Nano Carbon Co., Ltd., Nagoya-shi, Aichi 463-0018 (JP)
(72) Inventor: FUJITA, Takahiro, Tokyo 101-0021 (JP); HASHIMOTO, Takeshi, Nagoya-shi, Aichi 463-0018 (JP); TAKANO, Kei, Nagoya-shi, Aichi 463-0018 (JP)
(74) Representative: Müller-Boré & Partner Patentanwälte PartG mbB
(86) International application number: PCT/JP2024/031589
(87) International publication number: WO 2025/053136

(57) **Abstract**

A carbon nanotube collection apparatus includes: a collection room having an opening part leading to a carbon nanotube production apparatus; and a removal mechanism configured to remove an accumulation of carbon nanotubes adhering to a wall surface around the opening part, wherein the removal mechanism includes: a removal member to be inserted into the accumulation; and a driver configured to move the removal member between a removal position and a retreat position, the driver further including a structure configured to rotate the removal member with a movement direction of the removal member as a rotation axis.

## Description

### TECHNICAL FIELD

The present invention relates to a carbon nanotube collection apparatus and a carbon nanotube manufacturing apparatus.

### BACKGROUND ART

A carbon nanotube (hereinafter, sometimes referred to as a "CNT") has excellent characteristics such as electrical conductivity, thermal conductivity, mechanical strength, and so on, and is thus a new material attracting attention in many fields. As a manufacturing apparatus for the CNT, there is a known manufacturing apparatus using the chemical vapor deposition method (CVD method) of producing the CNT by thermally decomposing a raw material containing carbon (carbon source) disclosed in Patent Document 1.

Besides, Patent Document 2 discloses a manufacturing apparatus for the CNT including a collection apparatus for collecting the CNT. In the apparatus disclosed in Patent Document 2, the CNT is produced by supplying a raw material for the CNT and a carrier gas into a tube body from an upper end portion of a reaction tube heated at a high temperature and passing the raw material through the inside of the reaction tube. The produced CNT is discharged from a lower end portion of the reaction tube and collected by a collection apparatus provided below the reaction tube.

### PRIOR ART DOCUMENT

### PATENT DOCUMENT

Patent Document 1: Japanese Laid-open Patent Publication No. 2019-064918
Patent Document 2: Japanese Laid-open Patent Publication No. 2023-056489

### SUMMARY OF THE INVENTION

### PROBLEMS TO BE SOLVED BY THE INVENTION

The CNT discharged from the reaction tube is likely to adhere to a solid body and therefore the CNT adheres to a wall surface near an opening part of the collection room leading to the lower end of the reaction tube during a production process of the CNT. When a subsequent CNT newly produced in the reaction tube further adheres to the CNT having adhered to the wall surface, the CNTs accumulate so that the opening part of the collection room may be blocked by an accumulation of the CNTs.

When the opening part of the collection room is blocked by the accumulation of the CNTs, the internal pressure of the reaction tube increases. Even when the internal pressure of the reaction tube increases, normally, a crack occurs in the accumulation of the CNTs by the increased internal pressure so that the CNTs adhering to the wall surface peel off together with the gas discharged from the reaction tube passing through a gap formed at that time. Specifically, even if the opening part of the collection room is temporarily blocked by the accumulation of the CNTs, the discharge state of the CNTs returns to a normal state by itself, and the production process of the CNT can be continued.

However, in a case where the production amount of the CNTs per unit time is large or a case where the CNT likely to adhere to the solid body is produced, even if the internal pressure of the reaction tube increases, the accumulation of the CNTs does not peel off but the state where the opening part of the collection room is blocked may be kept. In this case, when the internal pressure of the reaction tube excessively increases, the apparatus needs to be stopped, resulting in a decreased production amount of the CNTs.

The present invention has been made in consideration of the above circumstances, and its object is to provide a carbon nanotube collection apparatus and a carbon nanotube manufacturing apparatus which suppress blockage of an opening part of a collection room leading to a reaction tube for producing a carbon nanotube.

### MEANS FOR SOLVING THE PROBLEMS

Aspects of the present invention solving the above problems are exemplified in the following.
(1) A carbon nanotube collection apparatus for collecting a carbon nanotube produced in a carbon nanotube production apparatus, the carbon nanotube collection apparatus including:
   a collection room having an opening part leading to the carbon nanotube production apparatus; and
   a removal mechanism configured to remove an accumulation of carbon nanotubes adhering to a wall surface around the opening part, wherein
   the removal mechanism includes:
      a removal member to be inserted into the accumulation; and
      a driver configured to move the removal member between a removal position and a retreat position,
      the driver further including a structure configured to rotate the removal member with a movement direction of the removal member as a rotation axis.
(2) The carbon nanotube collection apparatus according to (1), wherein
   a tip end of the removal member is not located on the rotation axis.
(3) A carbon nanotube collection apparatus for collecting a carbon nanotube produced in a carbon nanotube production apparatus, the carbon nanotube collection apparatus including:
   a collection room having an opening part leading to the carbon nanotube production apparatus; and
   a removal mechanism configured to remove an accumulation of carbon nanotubes adhering to a wall surface around the opening part, wherein
   the removal mechanism includes:
      a removal member to be inserted into the accumulation; and
      a driver configured to move the removal member between a removal position and a retreat position,
      the driver further including a structure configured to move the removal member in a direction different from a movement direction between the removal position and the retreat position of the removal member.
(4) The carbon nanotube collection apparatus according to any one of (1) to (3), wherein
   the removal member extends parallel to the movement direction.
(5) The carbon nanotube collection apparatus according to any one of (1) to (4), wherein:
   the collection room has:
      a first wall part having the opening part; and
      a second wall part adjacent to the first wall part;
   the retreat position is arranged on the second wall part side; and
   a separation member configured to come into contact with carbon nanotubes adhering to the removal member to separate the carbon nanotubes from the removal member is provided inside the second wall part.
(6) The carbon nanotube collection apparatus according to (5), wherein
   the separation member is formed with a through hole configured to allow the removal member to pass.
(7) A carbon nanotube manufacturing apparatus for manufacturing a carbon nanotube, the carbon nanotube manufacturing apparatus including:
   a carbon nanotube production apparatus for producing the carbon nanotube; and
   the carbon nanotube collection apparatus according to any one of (1) to (6).
(8) The carbon nanotube manufacturing apparatus according to (7), further including
   a controller configured to control an action of the removal mechanism, wherein:
   the carbon nanotube production apparatus includes:
      a reaction tube which is supplied with a raw material gas for the carbon nanotube; and
      a pressure measurement part configured to measure an internal pressure of the reaction tube; and
   the controller is configured to execute control of moving the removal member from the retreat position to the removal position when the internal pressure of the reaction tube measured by the pressure measurement part exceeds a predetermined pressure value.
(9) The carbon nanotube manufacturing apparatus according to (7), further including
   a controller configured to control an action of the removal mechanism, wherein
   the controller is configured to execute control of moving the removal member from the retreat position to the removal position when an elapsed time from completion of retraction from the removal position to the retreat position elapses a predetermined time.

### EFFECT OF THE INVENTION

According to the present invention, it is possible to provide a carbon nanotube collection apparatus and a carbon nanotube manufacturing apparatus which suppress blockage of an opening part of a collection room leading to a reaction tube for producing a carbon nanotube.

### BRIEF DESCRIPTION OF THE DRAWINGS

FIG. 1 is an explanatory view illustrating a schematic configuration of a CNT manufacturing apparatus according to an embodiment of the present invention.
FIG. 2 is an explanatory view of a CNT collection apparatus in FIG. 1 when viewed from below.
FIG. 3 is an explanatory view of the CNT collection apparatus in FIG. 1 when viewed from an X-direction negative side.
FIG. 4 is an explanatory view of a removal head of a CNT removal mechanism viewed from a rotation axis direction.
FIG. 5 is a view for explaining a plate for separating CNTs adhering to the removal head.
FIG. 6 is a view for explaining an action of the CNT removal mechanism.
FIG. 7 is a chart illustrating an example of a control flow of the removal mechanism.
FIG. 8 is a chart illustrating another example of the control flow of the removal mechanism.

### EMBODIMENTS FOR CARRYING OUT INVENTION

Hereinafter, embodiments of the present invention will be explained while referring to the drawings. Note that in the present description and the drawings, components having substantially the same functional configurations are denoted by the same reference numerals to omit overlapping explanation.

### <Carbon nanotube manufacturing apparatus>

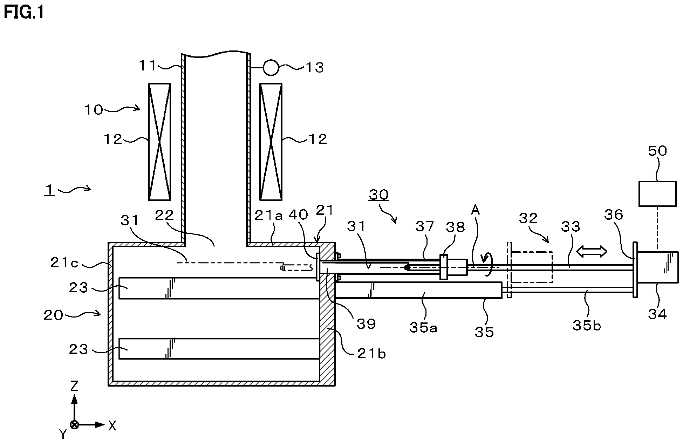

FIG. 1 is an explanatory view illustrating a schematic configuration of a CNT manufacturing apparatus 1 which manufactures a carbon nanotube (hereinafter, referred to as a "CNT" in some cases) according to this embodiment. The CNT in this description is a tubular carbon allotrope (typically, a cylindrical structure with a graphite structure), and includes a so-called single-walled CNT, multi-walled CNT, or carbon nanohorn having a horn-shaped tube tip. The CNT manufacturing apparatus 1 is preferably used particularly for the manufacture of the single-walled CNT.

The CNT manufacturing apparatus 1 has a production apparatus 10 which produces the CNT and a collection apparatus 20 which collects the CNT. Note that an "X-direction" in the drawings is a depth direction of the collection apparatus 20, a "Y-direction" is a width direction of the collection apparatus 20, and a "Z-direction" is a vertical direction. These X-direction, Y-direction, and Z-direction are directions perpendicular to one another.

### (Carbon nanotube production apparatus)

The production apparatus 10 for the CNT is an apparatus which produces the CNT using the chemical vapor deposition method (CVD method) for producing the CNT by thermally decomposing a raw material such as a catalytic metal or a catalytic metal compound. Note that when the raw material for the CNT is supplied to the production apparatus 10, a carrier gas (for example, a hydrogen gas) is also supplied together with the raw material. In this description, the raw material to be supplied together with the carrier gas is called a raw material gas.

The production apparatus 10 includes a reaction tube 11 supplied with the raw material gas for the CNT and a heater 12 arranged around the reaction tube 11.

At an upper end portion of the reaction tube 11, a raw material supply port (not illustrated) for supplying the raw material gas for the CNT is formed. The CNT is produced while the raw material gas supplied from the raw material supply port passes through the heated reaction tube 11, and the produced CNT is discharged from a lower end portion of the reaction tube 11.

The reaction tube 11 is a straight tubular body but the shape of the reaction tube 11 is not particularly limited. Besides, the shape of the reaction tube 11 in a cross section perpendicular to its tube axis may be a circular shape, an elliptical shape, a rounded shape such as an ovoid shape, or a polygonal shape. The material of the reaction tube 11 is appropriately selected in consideration of heat resistance against the heating temperature at the CNT production, thermal shock resistance, weather resistance against an atmosphere gas at that temperature, corrosion resistance, and so on. For example, alumina (Al₂O₃), mullite, silicon carbide (SiC), quartz glass, Kanthal (iron-chromium-aluminum alloy), Inconel, carbon, or the like is used.

The length of the reaction tube 11 is, for example, 0.5 to 4.0 m, preferably 1.0 to 3.0 m, and more preferably 2.0 to 2.5 m. The inside diameter of the reaction tube 11 is, for example, 10 to 300 mm, preferably 50 to 200 mm, and more preferably 80 to 120 mm.

The shape and the heating method of the heater 12 are not particularly limited as long as the reaction tube 11 can be heated to the temperature suitable for the CNT production. For example, a tungsten heater capable of heating the reaction tube 11 to 500°C to 2000°C, a carbon heater or silicon carbide heater (SiC heater) capable of heating the reaction tube 11 to 600°C to 1600°C, or the like can be used as the heater 12.

In the production apparatus 10 for the CNT, a pressure gauge 13 is provided as a pressure measurement part which measures the internal pressure of the reaction tube 11. During the production process of the CNT, the internal pressure of the reaction tube 11 is monitored by the pressure gauge 13. Information on the pressure measured by the pressure gauge 13 is output to a later-explained controller 50.

### (Carbon nanotube collection apparatus)

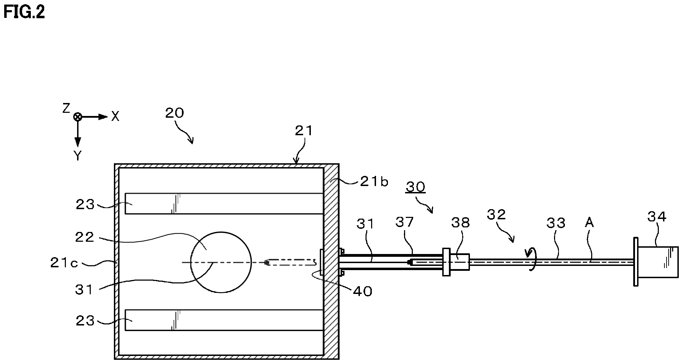

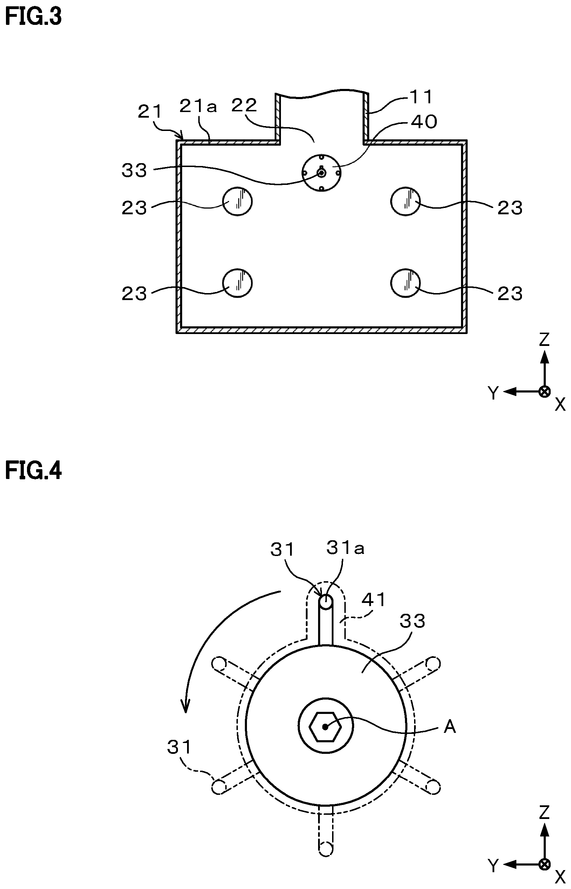

Next, a schematic configuration of the collection apparatus 20 for the CNT will be explained further referring to FIG. 2 and FIG. 3 in addition to FIG. 1. FIG. 2 is an explanatory view of the collection apparatus 20 in FIG. 1 when viewed from below. FIG. 3 is an explanatory view of the collection apparatus 20 in FIG. 1 when viewed from an X-direction negative side.

The collection apparatus 20 is arranged below the production apparatus 10. The collection apparatus 20 has a collection room 21 for collecting the CNT, and the collection room 21 is formed, for example, in a rectangular parallelepiped shape. A ceiling wall part 21a as a first wall part of the collection room 21 is formed with an opening part 22 leading to a lower end of the reaction tube 11 of the production apparatus 10. The CNT discharged from the lower end of the reaction tube 11 enters the collection room 21 through the opening part 22.

In the collection room 21, a roller 23 as a winding member is provided which winds the CNT having passed through the opening part 22. The roller 23 is arranged in a manner to extend from a side wall part 21b as a second wall part adjacent to the ceiling wall part 21a to an X-direction negative side. The roller 23 is installed to be rotatable with the X-direction as a rotation axis by a drive mechanism (not illustrated) provided outside the collection room 21. Further, four rollers 23 in total are installed at an interval in each of the Y-direction and the Z-direction.

Each of the above plurality of rollers 23 rotates during the production process of the CNT to wind the CNT discharged from the reaction tube 11. The CNT wound by any of the rotating rollers 23 forms into a doughnut-shaped wound body, and the wound body is collected from the collection room 21.

### (Removal mechanism for the CNT)

Next, a removal mechanism 30 for the CNT will be explained. The removal mechanism 30 has a function of removing an accumulation of CNTs when the CNTs adhere to and accumulate on a wall surface around the opening part 22.

The removal mechanism 30 has a removal head 31 as a removal member which is inserted into the accumulation of the CNTs, and a driver 32 for advancing, retracting, and rotating the removal head 31.

The removal head 31 is a member which extends in a direction (X-direction) parallel to an axial direction of the roller 23. A tip end shape of the removal head 31 is preferably sharp so as to easily penetrate the accumulation of the CNTs. An installation position of the removal head 31 in the vertical direction (Z-direction) is a position higher than the roller 23 and lower than the opening part 22. Note that the concrete installation position of the removal head 31 between the roller 23 and the opening part 22 may be appropriately changed, for example, according to the inside diameter of the reaction tube 11. When the discharge amount of the CNTs per time is large, the accumulation amount of the CNTs accumulated on the wall surface around the opening part 22 also increases, so that even if the removal head 31 is installed at a position away from the opening part 22, the removal head 31 can be brought into contact with the accumulation of the CNTs and can remove the accumulation of the CNTs. On the other hand, when the discharge amount of the CNTs per time is small, the CNTs accumulate in a region relatively close to the opening part 22 to block the opening part 22, so that the removal head 31 is installed at a position as close to the opening part 22 as possible and thereby can remove the accumulation of the CNTs.

The entire length of the removal head 31 is preferably longer than the diameter of the opening part 22. This can enlarge a removal range of the accumulation of the CNTs accumulated on the wall surface around the opening part 22 to improve the effect of suppressing the blockage of the opening part 22.

The material of the removal head 31 is preferably a material which is not deformed when the removal head 31 entangles the accumulation of the CNTs and a material which does not deteriorate due to the heat of the gas discharged from the reaction tube 11, and, for example, a material such as molybdenum, tungsten, steel material, or the like is selected.

From the viewpoint of facilitating removal, from the removal head 31, of the CNTs adhering to the surface of the removal head 31 after the accumulation of the CNTs is entangled, it is preferable to make the surface roughness of the removal head 31 smaller. Alternatively, Teflon (registered trademark) coating may be applied to the surface of the removal head 31.

Note that the removal head 31 is not limited to being composed of one linearly extending needle-like member but may be composed of a plurality of members such as a bifurcated shape or a trifurcated shape.

The driver 32 includes a rotation rod 33 as a bar member to which the removal head 31 is attached, a rotation motor 34 as a rotation drive source which rotates the rotation rod 33, and a cylinder 35 as a mechanism which linearly moves the rotation rod 33 in one direction.

The rotation rod 33 is a member which is formed, for example, in a columnar shape or a cylindrical shape and extends in the X-direction. The removal head 31 is attached to an end portion of the rotation rod 33 on the collection room 21 side, and the rotation motor 34 is connected to an end portion on the opposite side. The rotation rod 33 is rotated around a rotation axis A as a rotation center by driving of the rotation motor 34.

The removal head 31 extends in the direction parallel to the rotation axis A of the rotation rod 33 but is arranged offset from the rotation axis A. Therefore, a tip end 31a of the removal head 31 is not located coaxially with the rotation axis A of the rotation rod 33, but the tip end 31a of the removal head 31 is located at a position different from the rotation axis A when viewed from the tip end 31a side of the removal head 31 as illustrated in FIG. 4.

As illustrated in FIG. 1, the cylinder 35 is installed to be expandable and contractible in the X-direction outside the side wall part 21b of the collection room 21 and below the rotation rod 33. An end portion of a cylinder tube 35a of the cylinder 35 is fixed to the side wall part 21b. The rotation rod 33 and a cylinder rod 35b are arranged in parallel to each other, and an end portion of the rotation rod 33 and an end portion of the cylinder rod 35b on the rotation motor 34 side are coupled by a coupling board 36 as a coupling member.

According to the above-explained configuration of the driver 32, the rotation rod 33 moves in the X-direction accompanying the extension and contraction movement of the cylinder 35, and the rotation rod 33 rotates around the rotation axis A as a rotation center by driving of the rotation motor 34. The removal head 31 attached to the rotation rod 33 also moves in the X-direction accompanying the extension and contraction movement of the cylinder 35 and rotates around the rotation axis A as a rotation center.

The removal head 31 is movable in the X-direction and thereby can move between a "removal position" where it removes the accumulation of the CNTs adhering to the wall surface around the opening part 22 and a "retreat position" where it does not hinder the collection of the CNTs passing through the opening part 22. The concrete positions of the removal position and the retreat position are appropriately set according to the configuration of the collection apparatus 20, and the removal position and the retreat position in this embodiment are as follows.

The removal position is a position where the tip end of the removal head 31 exists on a side closer to a side wall part 21c than the opening part 22, and a position of the removal head 31 indicated by a two-dotted chain line in FIG. 1 and FIG. 2 is exemplified. Note that the side wall part 21c is a wall portion facing the side wall part 21b.

The retreat position is a position where the tip end of the removal head 31 exists outside the inner surface of the side wall part 21b.

At the side wall part 21b of the collection room 21, an adapter 37 is provided as a cylindrical member for housing a partial region of the rotation rod 33 and the removal head 31. The adapter 37 extends in the X-direction, and one end portion of the adapter 37 is fixed to the side wall part 21b. A space in the adapter 37 communicates with the inside of the collection room 21 so that the atmosphere in the adapter 37 is the same atmosphere as that in the collection room 21. At the other end portion of the adapter 37, a sealing member 38 is provided which shuts off outflow of the atmosphere from the inside to the outside of the adapter 37 and inflow of the atmosphere from the outside to the inside of the adapter 37.

Further, the side wall part 21b of the collection room 21 is formed with a passage port 39 through which the removal head 31 and the rotation rod 33 pass. On the inner surface of the side wall part 21b around the passage port 39, a plate 40 is provided as a separation member which separates the CNTs adhering to the removal head 31 from the removal head 31.

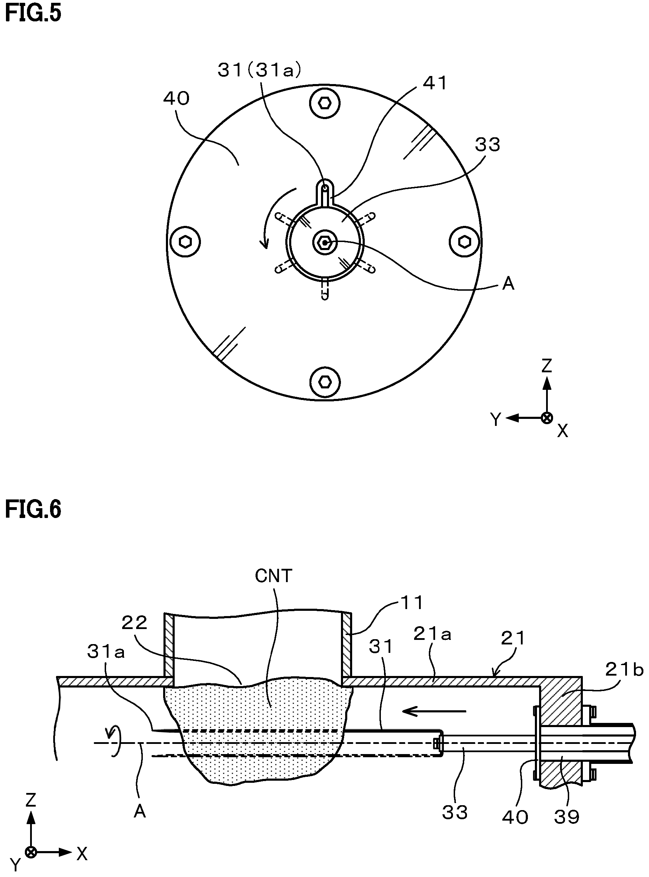

As illustrated in FIG. 5, the plate 40 is formed in a disk shape, and attached to the inner surface of the side wall part 21b, for example, by a fixing means such as a bolt fastening. At a central portion of the plate 40, a through hole 41 is formed through which the removal head 31 and the rotation rod 33 pass when the removal head 31 advances or retracts.

The through hole 41 is an opening slightly larger than peripheral edge shapes of the removal head 31 and the rotation rod 33, and has a peripheral shape similar to the peripheral edge shapes of the removal head 31 and the rotation rod 33. In the case of this embodiment, the outer shape of the rotation rod 33 is a circle, and the initial position before rotation of the removal head 31 is located at a position of a vertex on a rotation locus. Therefore, the shape of the through hole 41 viewed from the direction of the rotation axis A is a shape of a combination of a circular opening and an opening substantially linearly extending upward from a vertex of the opening.

The above plate 40 comes into contact with the CNTs adhering to the removal head 31 when the removal head 31 retracts from the inside of the collection room 21. Then, the removal head 31 further retracts in this state to leave only the CNTs in contact with the plate 40 remaining in the collection room 21. Thereafter, the removal head 31 retracts until the tip end 31a of the removal head 31 is located outside the collection room 21 beyond the plate 40, whereby the CNTs are separated from the removal head 31.

The plate 40 is preferably attached to be attachable to/detachable from the side wall part 21b so as to be replaceable with another plate having a through hole 41 different in shape. This makes it possible to appropriately select and use a plate having a through hole 41 suitable for the shape of the removal head 31, leading to increased versatility of the collection apparatus 20.

As the material of the plate 40, for example, molybdenum, tungsten, steel material, or the like is selected. Besides, to make it easy to peel off the CNT, which has been removed from the removal head 31, from the plate 40, Teflon (registered trademark) coating may be applied to the surface of the plate 40.

Note that the separation member for separating the CNTs adhering to the removal head 31 is provided as needed and is not limited to the plate 40 explained in this embodiment. The separation member only needs to be a member capable of coming into contact with the CNTs adhering to the removal head 31 and separating the CNTs from the removal head 31 at the time when the removal head 31 retracts. Further, the separation member is not limited to being fixed to the inner surface of the side wall part 21b.

As illustrated in FIG. 6, according to the removal mechanism 30 explained above, when the CNTs adhere to the wall surface around the opening part 22 during the production process of the CNT to form an almost semi-spherical accumulation, the removal head 31 can be advanced from the retreat position to the removal position. This can make a state where the removal head 31 is inserted into the accumulation of the CNTs.

Further, according to the removal mechanism 30, it is possible to rotate the rotation rod 33 to thereby rotate the removal head 31 around the rotation axis A as a rotation center in a state where the removal head 31 is inserted into the accumulation of the CNTs This makes it possible to entangle the accumulation of the CNTs by the removal head 31 and remove the CNTs adhering to the wall surface around the opening part 22.

The collection apparatus 20 for the CNT according to this embodiment has been explained above. In this collection apparatus 20, the provision of the removal mechanism 30 makes it possible to remove the accumulation of the CNTs adhering to the wall surface around the opening part 22 during the production process of the CNT. In other words, it is possible to suppress the occurrence of blockage of the opening part 22 due to the accumulation of the CNTs without stopping the production process of the CNT, leading to increased productivity of the CNT.

Note that at least any action of the advancement, rotation, and retraction of the removal head 31 may be started based on the judgment and operation of a field worker, and may be automatically started, for example, by an instruction from the controller 50 (FIG. 1) provided in the CNT manufacturing apparatus 1.

The controller 50 is a computer including, for example, a CPU, a memory, and so on, and has a program storage (not illustrated). The program storage stores various programs including instructions for controlling, for example, the action of the removal mechanism 30. The program storage stores, for example, programs for executing control explained in the following control example. Note that the programs may be the ones recorded in a computer-readable storage medium and installed from the storage medium into the controller 50.

### (Control example 1)

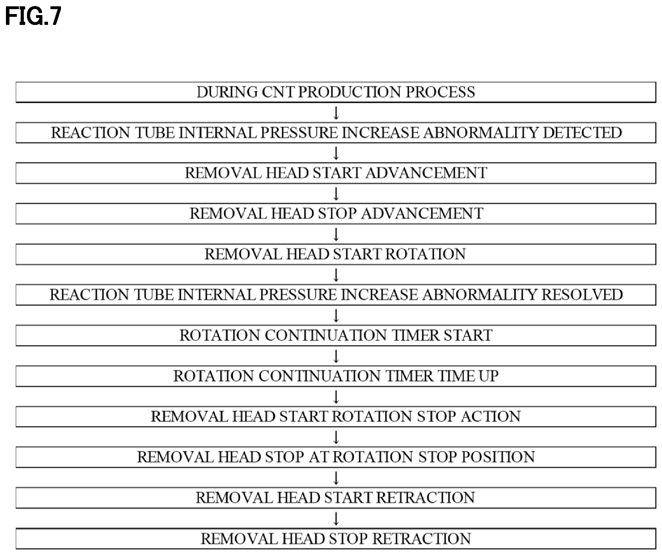

FIG. 7 is a chart illustrating an example of a control flow of the removal mechanism 30. In this control example, the internal pressure of the reaction tube 11 during the production process of the CNT is monitored and the action of the removal mechanism 30 is controlled based on the internal pressure. Note that the time measured by a timer in the following explanation is time counted in the controller 50.

During the production process of the CNT, when the accumulation amount of the CNTs adhering to the wall surface around the opening part 22 increases, the flow path for the gas to be discharged from the reaction tube 11 narrows to increase the internal pressure of the reaction tube 11. When the internal pressure of the reaction tube 11 increasing at this time exceeds a predetermined pressure value, the controller 50 determines that the increase in the internal pressure of the reaction tube 11 is in an abnormal state. Note that the "predetermined pressure value" is appropriately set according to the configuration of the manufacturing apparatus 1, the property of the CNT to be produced, and the like.

Thereafter, the cylinder 35 contracts based on a control signal from the controller 50, whereby the removal head 31 advances from the retreat position to the removal position. The advancing removal head 31 stops after reaching the removal position. At this stage, the removal head 31 is brought into a state of being inserted into the accumulation of the CNTs adhering to the wall surface around the opening part 22.

Next, the rotation motor 34 is driven based on a control signal from the controller 50 to start the rotation of the removal head 31. Thus, the removal head 31 entangles the accumulation of the CNTs to enlarge the flow path for the gas to be discharged from the reaction tube 11. As a result of this, the internal pressure of the reaction tube 11 decreases.

At the stage where the internal pressure of the reaction tube 11 becomes equal to or lower than the predetermined pressure value, the rotation action of the removal head 31 may be stopped. However, at this stage, the blockage of the opening part 22 is resolved, but the accumulation of part of the CNTs may remain on the wall surface around the opening part 22. Therefore, in order to further reduce the amount of the accumulation of the CNTs, it is preferable to continuously rotate the removal head 31.

Here, in the control example illustrated in FIG. 7, a rotation continuation timer is actuated after the internal pressure abnormality of the reaction tube 11 is resolved, to start the measurement of time, and the rotation of the removal head 31 is continued until after the time of the rotation continuation timer elapses a predetermined time.

Thereafter, when the time of the rotation continuation timer has elapsed the predetermined time, a rotation stop action of the removal head 31 is started based on a control signal from the controller 50. The rotation stop action is an action of rotating the removal head 31 to a position where the removal head 31 can pass through the through hole 41 of the plate 40 illustrated in FIG. 5. Note that the "predetermined time" referred to here is appropriately set according to the configuration of the manufacturing apparatus 1, the property of the CNT to be produced, and the like.

After the removal head 31 is rotated to a rotation stop position, the cylinder 35 extends based on a control signal from the controller 50. Thus, the retraction of the removal head 31 is started, the removal head 31 retracts from the removal position to the retreat position, and then an extension action of the cylinder 35 is stopped to stop the retraction of the removal head 31.

According to this control example, only when the blockage of the opening part 22 due to the accumulation of the CNTs occurs, the removal mechanism 30 can be actuated.

### (Control example 2)

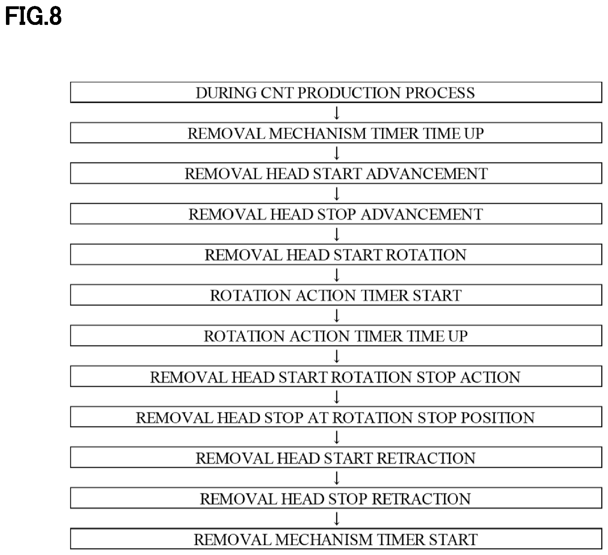

FIG. 8 is a chart illustrating another example of the control flow of the removal mechanism 30. In this control example, the next activation timing of the removal mechanism 30 is controlled based on an elapsed time since the last activation time of the removal mechanism 30. Note that the time measured by a timer in the following explanation is time counted in the controller 50.

In this control example, first, a removal mechanism timer is activated during the production process of the CNT, and the removal mechanism timer measures the elapsed time since the last activation time of the removal mechanism 30. Then, when the time of the removal mechanism timer elapses a predetermined time, the cylinder 35 contracts based on a control signal from the controller 50, and the removal head 31 advances from the retreat position to the removal position. Note that the "predetermined time" referred to here is appropriately set according to the configuration of the manufacturing apparatus 1, the property of the CNT to be produced, and the like.

After the advancing removal head 31 reaches the removal position and stops, the rotation motor 34 is driven based on a control signal from the controller 50 to start the rotation of the removal head 31. Here, a rotation action timer is activated to measure the time from when the rotation of the removal head 31 is started.

Thereafter, when the time of the rotation action timer has elapsed the predetermined time, a rotation stop action of the removal head 31 is started based on a control signal from the controller 50. Note that the "predetermined time" referred to here is appropriately set according to the configuration of the manufacturing apparatus 1, the property of the CNT to be produced, and the like.

After the removal head 31 is rotated to a rotation stop position, the cylinder 35 extends based on a control signal from the controller 50. Thus, the retraction of the removal head 31 is started, the removal head 31 retracts from the removal position to the retreat position, and then the extension action of the cylinder 35 is stopped to stop the retraction of the removal head 31.

After the retraction of the removal head 31 is stopped, the removal mechanism timer is activated to start the measurement of time, and the removal mechanism 30 is brought into a state of waiting until the next activation timing.

According to this control example, the removal mechanism 30 can be activated periodically at a constant interval. Therefore, for example, even in a case where the pressure gauge 13 for measuring the internal pressure of the reaction tube 11 cannot function due to a failure, the occurrence of blockage of the opening part 22 due to the accumulation of the CNTs can be suppressed.

### (Other configuration examples)

The movement direction at the advancement and at the retraction of the removal head 31 is the X-direction in the above example, but the movement direction of the removal head 31 may be a direction different from the extension direction of the roller 23 and may be, for example, the Y-direction. In other words, the movement direction is not particularly limited as long as the removal head 31 can move between the removal position and the retreat position.

Further, for example, the removal mechanism 30 may include a mechanism for moving the removal head 31 located at the removal position for the CNTs to the opening part 22 side. According to the removal mechanism 30, it becomes possible to, for example, advance the removal head 31 and then make the removal head 31 closer to the opening part 22 side, thereby facilitating the removal of the CNTs accumulated on the wall surface around the opening part 22. This can improve the effect of suppressing the blockage of the opening part 22.

The shape of the removal head 31 is preferably linear so as to easily peel the entangled CNTs from the removal head 31 but may be, for example, a non-linear shape such as a wave form or a spiral form. Further, the attachment position of the removal head 31 to the rotation rod 33 is the position offset from the rotation axis A in the above example but, for example, when the removal head 31 is in the non-linear shape, the attachment position of the removal head 31 and the rotation rod 33 may be coaxial with the rotation axis A. Also in this case, if the removal head 31 is in a non-linear shape, the removal head 31 can rotate around the rotation axis A as a rotation center to entangle the accumulation of the CNTs.

Though the accumulation of the CNTs is entangled by the advancement, rotation, and retraction of the removal head 31 in the above example, the removal head 31 may be moved in a direction different from the movement direction of the removal head 31 which moves between the removal position and the retreat position (for example, two directions perpendicular to the movement direction at the advancement or at the retraction of the removal head 31), instead of the rotation action. Specifically, for example, after the removal head 31 is advanced to the removal position, the removal head 31 may be repeatedly moved in order of a Z-direction position side, a Y-direction positive side, a Z-direction negative side, and a Y-direction negative side. A movement locus of the tip end 31a of the removal head 31 at this time is a quadrangle, also in which case the accumulation of the CNTs can be entangled as in the case of rotating the removal head 31 around the rotation axis A as a center.

However, when the removal head 31 is not rotated, a mechanism which moves the removal head 31 to three axes is required. Therefore, from the viewpoint of simplifying and down-sizing the apparatus configuration, it is preferable to employ a mechanism which rotates the removal head 31. Note that the mechanism which realizes the advancement, rotation, and retraction of the removal head 31 is not limited to a mechanism using the rotation rod 33, the rotation motor 34, and the cylinder 35 exemplified in the above embodiment.

Though the tube axis direction of the reaction tube 11 is the vertical direction in the above example, the tube axis direction may be a horizontal direction or another direction.

Although the embodiments of the present invention have been explained above, the present invention is not limited to such examples. It should be understood that various changes or modifications are readily apparent to those skilled in the art within the scope of the technical spirit as set forth in claims, and those should also be covered by the technical scope of the present invention.

For example, the configuration requirements of the above embodiments can be arbitrarily combined. From the arbitrary combination, the operations and effects about the configuration requirements relating to the combination can be naturally obtained, and other operations and other effects apparent to those skilled in the art are obtained from the description herein.

Besides, the effects explained herein are merely explanatory or illustrative in all respects and not restrictive. In other words, the technique relating to the present disclosure can offer other effects apparent to those skilled in the art from the description herein in addition to or in place of the above effects.

### INDUSTRIAL APPLICABILITY

The present invention is applicable to a collection apparatus for a carbon nanotube.

### EXPLANATION OF CODES

- 1: CNT manufacturing apparatus (carbon nanotube manufacturing apparatus)
- 10: CNT production apparatus (carbon nanotube production apparatus)
- 11: reaction tube
- 12: heater
- 13: pressure gauge
- 20: CNT collection apparatus (carbon nanotube collection apparatus)
- 21: collection room
- 21a: ceiling wall part
- 21b: side wall part
- 21c: side wall part
- 22: opening part
- 23: roller
- 30: removal mechanism
- 31: removal head
- 31a: tip end of removal head
- 32: driver
- 33: rotation rod
- 34: rotation motor
- 35: cylinder
- 36: coupling board
- 37: adapter
- 38: sealing member
- 39: passage port
- 40: plate
- 41: through hole
- 50: controller

## Claims

1. A carbon nanotube collection apparatus for collecting a carbon nanotube produced in a carbon nanotube production apparatus, the carbon nanotube collection apparatus comprising:
a collection room having an opening part leading to the carbon nanotube production apparatus; and
a removal mechanism configured to remove an accumulation of carbon nanotubes adhering to a wall surface around the opening part, wherein
the removal mechanism comprises:
a removal member to be inserted into the accumulation; and
a driver configured to move the removal member between a removal position and a retreat position,
the driver further comprising a structure configured to rotate the removal member with a movement direction of the removal member as a rotation axis.

2. The carbon nanotube collection apparatus according to claim 1, wherein
a tip end of the removal member is not located on the rotation axis.

3. A carbon nanotube collection apparatus for collecting a carbon nanotube produced in a carbon nanotube production apparatus, the carbon nanotube collection apparatus comprising:
a collection room having an opening part leading to the carbon nanotube production apparatus; and
a removal mechanism configured to remove an accumulation of carbon nanotubes adhering to a wall surface around the opening part, wherein
the removal mechanism comprises:
a removal member to be inserted into the accumulation; and
a driver configured to move the removal member between a removal position and a retreat position,
the driver further comprising a structure configured to move the removal member in a direction different from a movement direction between the removal position and the retreat position of the removal member.

4. The carbon nanotube collection apparatus according to claim 1, wherein
the removal member extends parallel to the movement direction.

5. The carbon nanotube collection apparatus according to claim 1, wherein:
the collection room has:
a first wall part having the opening part; and
a second wall part adjacent to the first wall part;
the retreat position is arranged on the second wall part side; and
a separation member configured to come into contact with carbon nanotubes adhering to the removal member to separate the carbon nanotubes from the removal member is provided inside the second wall part.

6. The carbon nanotube collection apparatus according to claim 5, wherein
the separation member is formed with a through hole configured to allow the removal member to pass.

7. A carbon nanotube manufacturing apparatus for manufacturing a carbon nanotube, the carbon nanotube manufacturing apparatus comprising:
a carbon nanotube production apparatus for producing the carbon nanotube; and
the carbon nanotube collection apparatus according to claim 1.

8. The carbon nanotube manufacturing apparatus according to claim 7, further comprising
a controller configured to control an action of the removal mechanism, wherein:
the carbon nanotube production apparatus comprises:
a reaction tube which is supplied with a raw material gas for the carbon nanotube; and
a pressure measurement part configured to measure an internal pressure of the reaction tube; and
the controller is configured to execute control of moving the removal member from the retreat position to the removal position when the internal pressure of the reaction tube measured by the pressure measurement part exceeds a predetermined pressure value.

9. The carbon nanotube manufacturing apparatus according to claim 7, further comprising
a controller configured to control an action of the removal mechanism, wherein
the controller is configured to execute control of moving the removal member from the retreat position to the removal position when an elapsed time from a stop of a retraction action from the removal position to the retreat position elapses a predetermined time.
